# EUROPÄISCHE PATENTANMELDUNG

(11) **EP 3 258 149 A1**
(43) Veröffentlichungstag der Anmeldung: **20.12.2017**
(21) Anmeldenummer: 16174376.0
(22) Anmeldetag: 14.06.2016
(51) Int. Cl.: F16K 51/02, F16K 1/24

(54) **VAKUUMVENTIL ZUR REGELUNG EINES FLUSSES UND ZUR UNTERBRECHUNG EINES FLIESSWEGES**

(71) Anmelder: VAT Holding AG, 9469 Haag (CH)
(72) Erfinder: NETZER, Martin, A-6700 Bludenz (AT); SEITZ, Daniel, CH-9434 Au (CH); SONDEREGGER, Harald, A-6835 Batschuns (AT)
(74) Vertreter: Kaminski Harmann

(57) **Zusammenfassung**

Vakuumventil (10) zur Regelung eines Stroms, mit einem Ventilsitz (12), der eine eine Öffnungsachse (A) definierende Ventilöffnung (16) und eine die Ventilöffnung (16) umlaufende und eine erste Dichtebene (E_{S}) definierende erste Dichtfläche (13) aufweist, mit einem Ventilteller (11) mit einer zu der ersten Dichtfläche (13) korrespondierenden zweiten Dichtfläche (14), wobei die zweite Dichtfläche (14) eine zweite Dichtebene (E_{T}) definiert, ferner mit einem mit dem Ventilteller (11) verbundenen und eine Aufnahme aufweisenden ersten Kopplungselement zur Bereitstellung einer gesteuerten Führung des Ventiltellers (11) und einer mit dem ersten Kopplungselement gekoppelten Antriebseinheit, die derart ausgebildet ist, dass der Ventilteller (11) von einer Offenposition, in welcher der Ventilteller (11) und der Ventilsitz (12) relativ zueinander kontaktlos vorliegen, in eine Schliessposition, in welcher die zweite Dichtfläche (14) des Ventiltellers (11) an die erste Dichtfläche (13) vermittels einer zwischenliegenden Dichtung (15) angedrückt ist, und zurück verstellbar ist. Die Antriebseinheit und der Ventilteller (11) sind derart ausgebildet und wirken derart zusammen, dass der Ventilteller (11) in eine Feinregelposition verstellbar ist, wobei der Ventilteller (11) relativ zum Ventilsitz (12) derart definiert schräg vorliegt, dass die erste Dichtebene (E_{S}) und die zweite Dichtebene (E_{T}) einen definierten Winkel (α) einschliessen, und die Dichtung (15) an einer der beiden Dichtflächen (13,14) vollständig anliegend und an der anderen Dichtfläche (13,14) nur teilweise anliegend vorliegt.

## Beschreibung

Die Erfindung betrifft ein Vakuumregelventil mit einem Ventilteller und einer Führung für den Ventilteller in zumindest drei Stufen.

Allgemein sind Vakuumventile zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt.

Vakuumschieberventile kommen insbesondere im Bereich der IC- und Halbleiterfertigung, die in einer geschützten Atmosphäre möglichst ohne das Vorhandensein verunreinigender Mikropartikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden.

Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Da Transferventile unter anderem bei der Herstellung hochsensibler Halbleiterelemente zum Einsatz kommen, muss die insbesondere durch die Betätigung des Ventils und durch die mechanische Belastung des Ventilverschlussgliedes verursachte Partikelgenerierung und die Anzahl der freien Partikel im Ventilraum möglichst gering gehalten werden. Die Partikelgenerierung ist primär eine Folge von Reibung beispielsweise durch Metall-Metall-Kontakt und durch Abrasion.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Die Dichtung insbesondere der Dichtungsring, kann in einer Nut gehalten und/oder aufvulkanisiert sein.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Die beschriebene mehrstufige Bewegung, bei welcher das Verschlussglied zuerst quer über die Öffnung geschoben wird, ohne dass es zu einer Berührung der Dichtung mit dem Ventilsitz kommt, und das Verschlussglied im Anschluss im Wesentlichen senkrecht auf den Ventilsitz gedrückt wird, bietet neben dem Vorteil, dass die Dichtung nahezu ausschliesslich senkrecht verpresst wird, ohne dass es zu einer Quer- oder Längsbelastung der Dichtung kommt, auch die Möglichkeit einer Regelung des Durchflusses eines Mediums (z.B. Prozessgas) durch die Ventilöffnung.

Hierfür kommt entweder ein einziger Antrieb, der eine L-förmige Bewegung des Verschlussglieds ermöglicht, oder eine Mehrzahl an Antrieben, beispielsweise zwei Linearantriebe oder ein Linear- und ein Spreizantrieb, zum Einsatz.

In einer verbreiteten Ausführungsform der oben genannten Ventiltypen sind das Verschlussglied (Ventilteller) und der Ventilantrieb über mindestens einen Verstellarm, insbesondere eine Schubstange oder Ventilstange, verbunden. Hierbei ist der starre Verstellarm mit seinem einen Ende starr mit dem Verschlussglied und mit seinem anderen Ende starr mit dem Ventilantrieb verbunden. Der Verschlussteller ist bei den meisten Ventilen mittels Verschraubung mit der mindestens einen Schubstange verbunden.

In der DE 10 2008 061 315 B4 wird eine Aufhängung einer Ventilplatte an einer Ventilstange mittels einem quer zur Ventilstange sich erstreckenden Querträger beschrieben. Der Querträger ist an einer mittleren Verbindungsstelle mit der Ventilstange insbesondere durch eine Schraube verbunden und an mindestens zwei beidseitig zu der mittleren Verbindungsstelle liegenden seitlichen Verbindungsstellen mit der Ventilplatte, insbesondere mittels Verschraubung, verbunden. Der Querträger weist in einem mittleren Abschnitt, der die mittlere Verbindungsstelle und beidseitig an diese anschließende Abschnitte des Querträgers umfasst, einen Abstand von der Ventilplatte auf. Der Querträger kann vorzugsweise materialeinstückig und insbesondere vollständig aus Metall ausgebildet sein.

In der US 6 471 181 B2 wird eine ähnliche Aufhängung beschrieben. Ein mit der Ventilstange zu verbindender Querträger umfasst eine erste Platte, die eine konische Öffnung zur Aufnahme des Endes der Ventilstange aufweist, die mit der ersten Platte verschraubt wird. Beidseitig zu der mittleren Verbindungsstelle mit der Ventilstange sind an der ersten Platte elastische Lagerblöcke angebracht, an deren der ersten Platte gegenüberliegenden Seiten zweite Platten angebracht sind, welche jeweils mit der Ventilplatte verschraubt werden.

In der US 2008/0066811 A1 wird ein Vakuumventil beschrieben, bei welchem eine Ventilplatte mit ersten und zweiten Querträgern verbunden ist. Die Querträger sind mit der Ventilplatte über Verbindungsglieder verbunden. Diese weisen von einer Verbindungsstelle mit dem Querträger beidseitig in Längsrichtung des Querträgers sich erstreckende Verbindungsarme auf, die endseitig mit einem gemeinsamen in Längsrichtung des Querträgers sich erstreckenden Verbindungsschenkel verbunden sind, welcher an mehreren in Längsrichtung des Querträgers beabstandeten Stellen an der Ventilplatte angeschraubt ist. Hierdurch soll eine gleichmäßigere Kraftübertragung in Längsrichtung der Querträger erreicht werden.

Die US 6,994,311 B2 offenbart ein Vakuumregelventil mit dem Ziel des Herstellens eines symmetrischen Flusses durch eine Öffnung in einer geöffneten Ventilposition. Der Ventilteller ist zentral an einer Führung (Ventilstange) aufgehängt und kann axial geführt werden, so dass ein Volumenstrom durch die Öffnung in Abhängigkeit des Abstands zwischen Ventilteller und Ventilsitz eingestellt werden kann.

Den obigen Ausführungsformen ist gemein, dass insbesondere bei einem Regeln eine durch eine dieser Konstruktionen resultierende Regelkurve (Volumenstrom über Zeiteinheit) typischerweise mit einem nachteiligen Kurvenverlauf auftritt. Im Speziellen zeigt die Kurze im Übergang von einem fast geschlossenen Ventilzustand in einen vollständig geschlossenen Ventilzustand einen deutlich inhomogenen Kurvenverlauf aufgrund eines dabei auftretenden "Zuschnappeffekts". Ein Strom durch die Öffnung wird dabei abrupt unterbrochen. Eine Feinregelung in sehr niedrigen Druckbereichen ist dadurch nur sehr schwer umsetzbar bzw. nicht möglich.

Der Erfindung liegt somit die Aufgabe zugrunde ein Vakuumventil bereitzustellen, welches einerseits einen gesteuerten gasdichten Verschluss einer Ventilöffnung und andererseits eine verbesserte Regelungsfunktionalität für einen Strom durch die Öffnung bereitstellt.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Der Erfindung liegt die Motivation zugrunde, insbesondere im Lichte der Anforderung einer präzisen Regelung eines molekularen Gasflusses in sehr niedrigen Vakuumdruckbereichen (z.B. kleiner als 10⁻⁶ mbar), die Durchflussregelung verlässlich geregelt und über möglichst die gesamte Regelkurve kontrollierbar oder homogen zu gestalten. Die molekularen Gasflüsse spielen ebenso in der Transitzone (< 10⁻³ mbar) eine Rolle und sind durch verhältnismässig grosse freie Weglänge der Gasmoleküle charakterisiert. Die Erfindung beruht auf dem Ansatz eine Regelung des Flusses mit Hilfe eines zunächst schrägen Kontaktierens des Ventiltellers mit dem Ventilsitz umzusetzen, wobei der Volumenstrom in Abhängigkeit der relativen Schrägstellung (bei Kontakt zwischen Ventilteller und Ventilsitz) einstellbar ist. Ein grösserer Öffnungswinkel bedeutet hierbei eine grösserer Durchtrittsöffnung und somit die Möglichkeit eines Durchflusses eines grösseren Volumens pro Zeiteinheit. Durch ein Verkleinern des Öffnungswinkels kann der Durchfluss schrittweise und/oder kontinuierlich reduziert werden, bis ein vollständiger Kontakt der Dichtflächen bzw. der Dichtung des Ventilsitzes und des Ventiltellers besteht und die Öffnung damit in einem vollständig verschlossenen Zustand (Schliessposition) vorliegt.

Mit einem erfindungsgemässen Ventil können oben genannte Flüsse vorteilhaft, d.h. auch bei sehr geringen Drücken und unter Bereitstellung und Beibehaltung eines im Wesentlichen symmetrischen und laminaren Flusses, reguliert werden.

Die Erfindung betrifft ein Vakuumventil, insbesondere ein Vakuumregelventil, zur Regelung eines Volumen- oder Massenstroms und zum gasdichten Unterbrechen eines Fliesswegs. Das Ventil hat einen Ventilsitz, der eine eine Öffnungsachse definierende Ventilöffnung und eine die Ventilöffnung umlaufende und eine erste Dichtebene definierende erste Dichtfläche aufweist. Zudem ist ein Ventilteller zur Regelung des Volumen- oder Massenstroms und zur Unterbrechung des Fliesswegs mit einer zu der ersten Dichtfläche korrespondierenden zweiten Dichtfläche vorgesehen, wobei die zweite Dichtfläche eine zweite Dichtebene definiert, deren veränderliche Lage durch eine jeweilige Position und Ausrichtung des Ventiltellers bestimmt ist.

Zudem verfügt das Ventil über ein mit dem Ventilteller verbundenes und eine Aufnahme aufweisendes erstes Kopplungselement zur Bereitstellung einer gesteuerten Führung des Ventiltellers und über eine mit dem ersten Kopplungselement, insbesondere vermittels der Aufnahme, gekoppelte Antriebseinheit, die derart ausgebildet ist, dass der Ventilteller verstellbar ist. Der Ventilteller ist von einer Offenposition, in welcher der Ventilteller und der Ventilsitz relativ zueinander kontaktlos vorliegen, in eine Schliessposition, in welcher über eine dazwischen liegende Dichtung ein axial dichtender Kontakt zwischen der ersten Dichtfläche und der zweite Dichtfläche besteht und die Ventilöffnung dadurch im Wesentlichen gasdicht verschlossen ist, und zurück verstellbar, zumindest im Wesentlichen entlang einer geometrischen Längsachse in eine Längsschliess- oder Längsöffnungsrichtung.

Die Antriebseinheit und der Ventilteller sind derart ausgebildet und wirken derart zusammen, insbesondere sind diese derart gekoppelt, dass der Ventilteller in eine Feinregelposition verstellbar ist, wobei der Ventilteller relativ zum Ventilsitz derart definiert schräg vorliegt, dass die erste Dichtebene und die zweite Dichtebene einen definierten Winkel einschliessen, und die Dichtung an einer der beiden Dichtflächen vollständig anliegend und an der anderen Dichtfläche nur teilweise anliegend vorliegt. Mit anderen Worten sind die erste und die zweite Dichtfläche vermittels der Dichtung nur teilweise in Kontakt. Die erste oder die zweite Dichtfläche ist also nur zum Teil auf die Dichtung angedrückt. Ein anderer Teil der Dichtung bleibt von der gegenüberliegenden Dichtfläche unberührt. Dadurch ist eine bewusst nichtvollständige Abdichtung der Öffnung hergestellt.

In der Feinregelposition ist somit ein geringerer Flächenanteil der Dichtung mit der gegenüberliegenden Dichtfläche in Berührung oder Verpressung als in der Schliessposition.

Durch solch eine gezielte Schrägstellung und den in Abhängigkeit der Schräge einstellbaren Öffnungsbereich der Ventilöffnung ist die vorteilhafte Druck- und Flussregelung ermöglicht. Derartige Regelungen können typischerweise z.B. bei der Verwendung von Prozessgas und dem damit verbundenen Erfordernis der Einstellung eines Solldrucks eingesetzt werden. Durch eine damit bewirkbare andauernde laminare Strömung des Mediums durch die Öffnung können Druckschwankungen vermieden werden und der Solldruck kann schneller erreicht werden. Durch die weiterhin gegebene Möglichkeit der vollständigen Trennung des Ventiltellers von dem Ventilsitz (Offenposition) kann die Durchflussöffnung andererseits sehr gross gewählt werden.

Die Antriebseinheit und der Ventilteller sind insbesondere derart ausgebildet und gekoppelt, dass bei dem Verstellen des Ventiltellers von der Offenposition in die Schliessposition oder von der Schliessposition in die Offenposition der Ventilteller vor Erreichen der Schliessposition bzw. vor Erreichen der Offenposition die Feinregelposition einnimmt. Dies kann beispielsweise durch eine entsprechende Ansteuerung der Antriebseinheit realisiert sein, z.B. durch ein gesteuertes Kippen der Führungsstange oder des Tellers relativ zum Ventilsitz. Das Kippen kann beispielsweise in einer Führung der Führungsstange, d.h. durch eine entsprechend schwenkbare Lagerung der Führung, bereitgestellt werden. Es kann auch ein Kippen allein des Tellers relativ zum Sitz durch eine entsprechend variierbare Lagerung des Tellers relativ zur Führungsstange oder relativ zu einem Verstellarm bereitgestellt sein.

Alternativ kann der Teller bereits mit einer vorbestimmten Querstellung in Bezug auf die Dichtfläche des Ventilsitzes angeordnet sein. Auch hierdurch kann die gewünschte Schrägstellung erzielt werden.

Weiterhin kann bezüglich zweier Endseiten des Ventiltellers (nicht Ober- und Unterseite sondern bezogen auf den Tellerrand) eine unterschiedliche Linearbewegung (Schliessbewegung) ausgeführt werden, so dass die eine Seite des Tellers früher den Sitz erreicht als die gegenüberliegende Seite.

Gemäss einer erfindungsgemässen Ausführungsform ist der Ventilteller in der Feinregelposition derart positioniert, dass die durch eine Erstreckung der zweiten Dichtfläche definierte zweite Dichtebene schräg zu der Öffnungsachse oder zu der Längsachse vorliegt. Die Lage der Längsachse ist insbesondere durch die durch die Antriebseinheit bereitgestellte Verstellrichtung definiert. Der Ventilteller würde dann z.B. nicht in eine Richtung parallel zu einer Normalen der Tellerunterseitenfläche bewegt werden, sondern würde in seiner Schräglage quer dazu bewegt werden, insbesondere so dass er in dieser Schräglage dann den Ventilsitz kontaktiert.

Bezüglich der Ausrichtung der Dichtfläche des Ventilsitzes kann gemäss einer Ausführung die erste Dichtfläche (des Ventilsitzes) in eine Richtung parallel zur Öffnungsachse oder zur Längsachse weisen und sich orthogonal zur Öffnungsachse oder zur Längsachse erstrecken. Eine solche Konfiguration ist die typische Ausführung für ein erfindungsgemässes Ventil.

Alternativ kann die erste Dichtfläche jedoch auch in eine Richtung quer zur Öffnungsachse oder Längsachse und schräg zu einer orthogonal zur Öffnungsachse oder zur Längsachse sich erstreckenden Ebene weisen. In einer solchen ebenso erfindungsgemässen Ausführung kann der Ventilteller auch bei einer orthogonalen Ausrichtung relativ zur Längsachse oder Öffnungsachse schräg zur Anlage auf dem Ventilsitz gebracht werden und die Regelung durch die Schrägstellung bereitgestellt werden. Mit anderen Worten, anstelle einer gezielten Querstellung des Ventiltellers kann der Ventilsitz bzw. dessen Dichtfläche schräg gestellt sein.

In einer Ausführungsform schliesst die erste und die zweite Dichtebene in der Offenposition und in der Feinregelposition einen definierten Winkel α ein und die erste und die zweite Dichtebene sind in der Schliessposition im Wesentlichen parallel zueinander ausgerichtet. Bei einer Bewegung von der Feinregelposition hin zur Schliessposition nähert sich der Wert des Winkels α also immer näher an "Null" an und wird schliesslich zu "Null".

Es versteht sich dass gemäss einer Ausführung nicht nur eine einzelne Feinregelposition eingestellt werden kann, sondern eine zweite, mehrere oder eine Vielzahl von Feinregelpositionen des Ventiltellers, insbesondere kontinuierlich, einstellbar sind. Dabei sind die jeweils durch die erste und die zweite Dichtebene eingeschlossenen Winkel αₙ jeweils unterschiedlich und die erste und die zweite Dichtfläche sind vermittels der Dichtung jeweils nur teilweise in Kontakt. Die mehreren Feinregelpositionen können also jeweils einer anderen Schräglage von Ventilteller in Bezug auf den Ventilsitz entsprechen. Insbesondere kann jede Schrägstellung während einer kontinuierlichen Schliessbewegung einer jeweiligen Feinregelposition zugeordnet werden.

Insbesondere können die Feinregelpositionen gesteuert jeweils individuell oder fortlaufend eingestellt und damit eine insbesondere kontinuierliche Regelung des Volumen- oder Massenstroms eines Mediums durch die Ventilöffnung bereitgestellt werden. Die Strömung kann dabei insbesondere laminar beibehalten werden. Eine solche Regelung wird insbesondere durch einen Schrittmotor oder einen Servomotor der Antriebseinheit bereitgestellt, durch den die Führungsstange bzw. Schubstange bewegt wird.

Hinsichtlich der Kopplung des Ventiltellers an die Antriebseinheit bzw. bezüglich der in einem gewissen Rahmen elastischen Schwenkbarkeit durch die Aufhängung des Ventiltellers kann gemäss einer Ausführungsform das erste Kopplungselement als ein sich quer zur Öffnungsachse oder zur Längsachse erstreckender Querträger ausgebildet sein und an einer Rückseite des Ventiltellers an zumindest einer Verbindungsstelle mit dem Ventilteller verbunden sein.

Ein solcher Querträger ist hinsichtlich Materialbeschaffenheit und/oder Form elastisch ausgebildet, d.h. mit diesem ist eine gewisse Verdrillbarkeit und damit ein Schwenken des Tellers um eine durch die Ersteckung des Trägers definierte Schwenkachse bereitgestellt. Diese Eigenschaft des Querträgers ermöglicht eine homogene Anpressung der Dichtfläche auf die Dichtung (bzw. umgekehrt) über die möglichen Feinregelpositionen hinweg bis hin zur vollständigen Verschliessung des Ventils. Mittels der Verdrillung des Querträgers kann somit eine Art (Zu-)Klappen des Ventiltellers erfolgen ohne dass eine Querbeanspruchung des Dichtmaterials auftritt und damit ohne eine ungewollte Partikelerzeugung. Das Klappen erfolgt dann aus einer Schräglage in eine Parallellage der Dichtebenen.

In einer Ausführung stellt die Aufnahme des Querträgers eine mittlere Kopplungsstelle für eine Kopplung der Antriebseinheit quer zu einer Erstreckungsrichtung des Querträgers bereit und der Querträger ist mittels eines sich quer zu der Erstreckungsrichtung des Querträgers erstreckenden Verstellarms mit der Antriebseinheit verbunden. Der Querträger wird hierbei also mit dem Verstellarm verbunden und der Ventilteller durch eine Bewegung des Verstellarms geführt.

Gemäss einer weiteren Ausführungsform kann der Querträger entsprechend auf der Rückseite des Ventiltellers an mindestens zwei beidseitig zu der mittleren Kopplungsstelle liegenden seitlichen Verbindungsstellen mit dem Ventilteller verbunden sein. In einem mittleren Abschnitt, der die mittlere Kopplungsstelle und beidseitig an diese anschliessende Abschnitte umfasst und sich zwischen den seitlichen Verbindungsstellen erstreckt, kann der Querträger dann einen bestimmten Abstand von der Rückseite aufweisen und derart elastisch ausgebildet sein, dass durch eine Verwindung des Querträgers der Ventilteller relativ zu dem Verstellarm um eine rechtwinklig zu der Öffnungsachse oder zu der Längsachse stehende Schwenkachse verschwenkbar ist. Der Querträger und der Verstellarm sind insbesondere einstückig ausgebildet.

Im Speziellen kann die Verbindung des Querträgers mit dem Ventilteller an der zumindest einen Verbindungsstelle eine Reibrührschweissverbindung aufweisen. Dadurch kann die Gefahr einer Partikelerzeugung, die z.B. bei einer Verschraubung gegeben ist, weiter reduziert werden.

Gemäss einer erfindungsgemässen Ausführungsform weist die Antriebseinheit zumindest einen Motor und zumindest eine durch den zumindest einen Motor gesteuert entlang oder parallel der Längssachse bewegbare Führungskomponente, insbesondere Führungsstange, auf und der Ventilteller ist mit der Führungskomponente vermittels der Aufnahme verbunden und relativ zum Ventilsitz bewegbar. Beispielsweise ist der Teller mittelbar durch einen Verstellarm und einen Querträger mit der Führungskomponente verbunden. Die Lage der Längssachse ist insbesondere definiert durch die Erstreckung der Führungskomponente, die z.B. als Schubstange oder Führungsstange ausgeführt bzw. bezeichnet ist, und/oder durch die durch die Antriebseinheit bereitgestellte Linearbewegungsrichtung.

Gemäss einer spezifischen Ausführungsform weist die Antriebseinheit zumindest einen Motor, insbesondere zwei Motoren, und zwei durch den zumindest einen Motor bzw. die zwei Motoren gesteuert parallel zur Längssachse bewegbare Führungskomponenten, insbesondere Führungsstangen, auf. Die beiden Führungskomponenten definieren dabei eine gemeinsame Längssachse, die z.B. eine Mittelparallel zu den beiden Führungsstangen bildet.

Insbesondere kann der Ventilteller ein mit ihm verbundenes zweites Kopplungselement mit einer Aufnahme aufweisen, wobei das erste und das zweite Kopplungselement direkt an dem Ventilteller angeordnet sind, insbesondere einstückig mit dem Ventilteller ausgebildet sind, und jeweils eine Führungskomponente mit einer jeweiligen der Aufnahmen des ersten und des zweiten Kopplungselements verbunden ist. Die Kopplungselemente sind insbesondere gegenüberliegend, d.h. diese können bezüglich einer Mittelsenkrechten durch den Ventilteller achsensymmetrisch am Rand des Tellers angebracht oder ausgeformt sein. Damit lässt sich eine Ausrichtung des Tellers relativ zum Ventilsitz mittels einer individuellen Bewegung der beiden Führungsstangen verändern. Wird die eine Stange z.B. weiter bewegt als die andere kann der Teller schräg zum Sitz ausgerichtet und in die Feinregelposition geführt werden.

Gemäss einer Ausführungsform kann die Antriebseinheit also zwei Motoren aufweisen und jede der zwei Führungskomponenten kann durch einen der Motoren gesteuert bewegbar sein. Die Feinregelposition, insbesondere die Vielzahl der Feinregelpositionen, ist bzw. sind mittels einer definierten, insbesondere individuellen, derartigen Ansteuerung der zwei Motoren bereitstellbar, dass dadurch die Schrägstellung der ersten relativ zur zweiten Dichtebene bewirkbar ist.

In einer Ausführung weist das Ventil eine die beiden Führungskomponenten verbindende Brücke auf, wobei das erste Kopplungselement mit der Brücke verbunden ist. Mit einer solchen Ausführungsform kann der Ventilteller zentral zwischen den Führungsstangen angeordnet werden. Die gewünschte Schrägstellung des Tellers kann mittels einer entsprechenden Motoransteuerung realisiert werden, d.h. das erste Tellerende, das mit der ersten Führungsstange gekoppelt ist, wird so geführt, das dessen Abstand zum Ventilsitz geringer ist als derjenige Abstand des zweiten Tellerendes. Das Kopplungselement kann hierbei insbesondere als der Querträger ausgebildet sein. Hierdurch kann aus der Kombination der Elastizität des Querträgers mit der individuellen Motoransteuerung eine hochpräzise Regelung des Fliessens durch die Ventilöffnung erfolgen, wobei eine homogene Verpressung der Dichtung und eine weitgehend laminare Strömung durch die Öffnung gegeben sind.

Obige Ausführungsform vereint damit die zweiteilige Tellerführung (mit zwei Führungsstangen) mit einem Querträger, durch den der Ventilteller mit den Führungsstangen zumindest mittelbar gekoppelt ist.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figs. 1a-b: eine erste und eine zweite Ausführungsform eines erfindungsgemässen Vakuumventils in einer Offenposition;
- Figs. 2a-b: die erste und die zweite Ausführungsform eines erfindungsgemässen Vakuumventils in einer Feinregelposition;
- Figs. 3a-b: die erste und die zweite Ausführungsform eines erfindungsgemässen Vakuumventils in einer Schliessposition;
- Figs. 4a-c: eine dritte Ausführungsform eines erfindungsgemässen Vakuumventils in einer Offenposition und in einer Feinregelposition in unterschiedlichen Perspektiven; und
- Figs. 5a-c: eine vierte Ausführungsform eines erfindungsgemässen Vakuumventils in einer Offenposition und in einer Feinregelposition in unterschiedlichen Perspektiven.

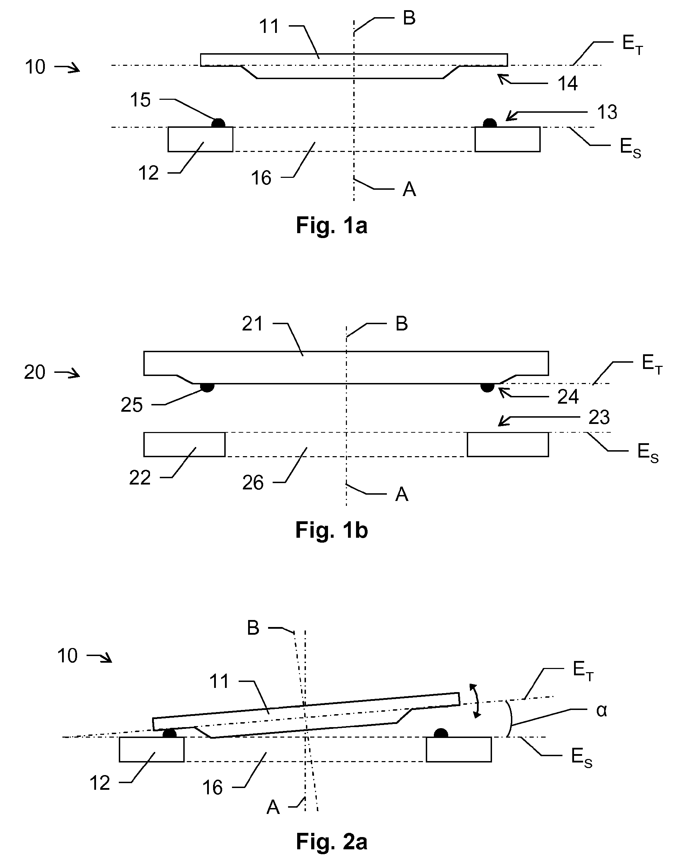

Figur 1a zeigt schematisch einen Querschnitt durch eine Ausführungsform eines Vakuumventils 10 gemäss der Erfindung in einer Offenposition. Das Ventil 10 weist einen Ventilteller 11 als Verschlusselement und einen dem Ventilteller 11 gegenüberliegenden Ventilsitz 12 auf. Der Ventilsitz 12 umläuft und definiert somit eine Ventilöffnung 16. Der Ventilteller 11 ist relativ zum Ventilsitz 12 beweglich angeordnet, wobei die Beweglichkeit zumindest entlang einer durch die Öffnung 16 definierten Öffnungsachse A oder entlang einer durch die Ausrichtung der zweiten Dichtfläche 14 definierten Achse B bereitgestellt ist. Die Achsen A und B fallen in der gezeigten Position aufgrund einer parallelen Ausrichtung des Tellers 11 bzw. dessen Dichtfläche 14 relativ zum Sitz 12 zusammen.

Alternativ kann der Ventilteller 11 in der Offenposition auch nicht parallel sondern gewinkelt (schräg) relativ zum Ventilsitz 12 ausgerichtet sein.

Sowohl der Ventilteller 11 als auch der Ventilsitz 12 besitzen jeweils eine Dichtfläche - eine erste 13 und eine zweite 14 Dichtfläche. Die erste Dichtfläche 13 weist zudem eine Dichtung 15 auf. Diese Dichtung 15 kann beispielsweise als Polymer mittels Vulkanisation auf den Ventilsitz 12 aufvulkanisiert sein. Alternativ kann die Dichtung 15 z.B. als O-Ring in einer Nut des Ventilsitzes 12 ausgeführt sein. Auch kann ein Dichtmaterial auf den Ventilsitz 12 aufgeklebt sein und dadurch die Dichtung 15 verkörpern. In einer alternativen Ausführungsform kann die Dichtung 15 seitens des Ventiltellers 11, insbesondere auf der zweiten Dichtfläche 14, angeordnet sein. Auch Kombinationen dieser Ausführungen sind denkbar.

Die Dichtfläche 13 definiert eine erste Dichtebene E_{S} für den Ventilsitz 12 und die Dichtfläche 14 eine zweite Dichtebene E_{T} für den Ventilteller 11. Die Lage der Dichtebenen E_{T} und E_{S} ist somit zum einen abhängig von der Erstreckung der jeweiligen Dichtfläche und zum zweiten von der aktuellen räumlichen Ausrichtung (und Position) des Ventiltellers 11 bzw. des Ventilsitzes 12.

Figur 1b zeigt eine weitere Ausführungsform eines erfindungsgemässen Ventils 20 in einer Offenposition. Das Ventil 20 ist ähnlich dem aus Figur 1 aufgebaut.

Als Unterschied ist die Dichtung 25 hier seitens der Dichtfläche 24 des Ventiltellers 21 angeordnet und eine korrespondierende Dichtfläche 23 auf dem Ventilsitz 22 ausgebildet. Die Dichtflächen 23 und 24 definieren wiederum entsprechende Dichtebenen E_{T} und E_{S}.

Die Figuren 1a und 1b zeigen jeweilige Ventilausführungen rein schematisch. Nicht gezeigt ist jeweils eine Antriebseinheit zur Bewegung des Ventiltellers 11 bzw. 21 relativ zum jeweiligen Ventilsitz. Solch eine Antriebseinheit weist typischerweise einen Motor auf, insbesondere einen Schrittmotor oder einen Servomotor. Der Ventilteller kann an die Antriebseinheit mittels einer entsprechenden Konstruktion angekoppelt sein. Hierfür sind erfindungsgemäss unterschiedliche Ausführungen möglich.

Zum einen kann die Antriebseinheit eine Schubstange (Führungsstange) aufweisen, die mittels des Motors linear entlang einer Längsachse bewegbar ist. Mit der Schubstange ist ein erstes Ende eines Verstellarms verbunden, insbesondere quer oder orthogonal gewinkelt zur Stange. Die Verbindung zwischen Schubstang und Verstellarm ist starr ausgebildet. An einem zweiten, gegenüberliegenden Ende ist ein Querträger vorgesehen, der sich quer zum Verstellarm erstreckt und wiederum mit dem Ventilteller verbunden ist. Der Querträger ist derart elastisch ausgebildet, dass der Teller um eine durch die Erstreckung des Querträgers definierte Schwenkachse schwenkbar. Eine gewünschte Schwenkbarkeit des Tellers und damit die Möglichkeit einer gewünschten Schrägstellung und Veränderung der Schräge des Tellers relativ zum Ventilsitz werden hierbei durch eine bereitgestellte Verdrillung des Trägers ermöglicht.

Als eine alternative oder auch kombinierbare Ausgestaltung des Abtriebs für den Ventilteller kann eine Vorrichtung mit zwei Führungskomponenten (Schubstangen) realisiert sein. Der Teller verfügt hierbei über zwei Aufnahmen, die insbesondere an zwei gegenüberliegen Seiten bezüglich des Tellerumfangs angeordnet sind. Je eine Schubstange ist mit einer der Aufnahmen verbunden. Der Antrieb der Schubstangen erfolgt bevorzugt mittels zweier Motoren, kann jedoch auch mit mindestens einem Motor und einer Getriebeeinheit ungesetzt sein. Durch eine nicht parallel erfolgende Linearbewegung der Schubstangen (bezüglich der Linearposition der Schubstangen) kann hierdurch ebenso eine Schrägstellung und Einstellung der Schrägstellung des Ventiltellers relativ zum Ventilsitz gesteuert bereitgestellt werden.

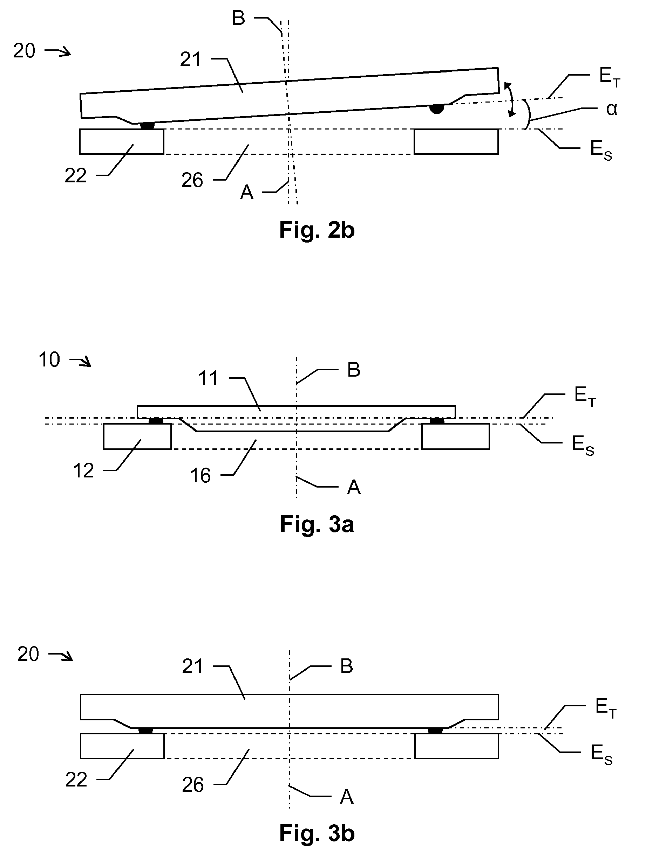

Die Figuren 2a und 2b zeigen die Ventilausführungen gemäss der Figuren 1a und 1b nicht in der Offenposition, sondern in einer Feinregelposition. Hierbei sind jeweils die Ventilteller 11 bzw. 21 nicht parallel zu den Ventilsitzen 12 bzw. 22 ausgerichtet, sondern in einer Schrägstellung relativ zueinander. Die Ventile sind so ausgebildet (und ggf. gesteuert), dass eine solche Feinregelposition jeweils bei einer Schliessbewegung des Ventiltellers vor Erreichen einer Schliessposition erreicht und eingenommen werden kann.

Die Dichtebenen E_{T} und E_{S} liegen dabei nicht parallel vor und schneiden sich somit, wobei ein Winkel α eingeschlossen wird. Diese gewünschte Schrägstellung, also der Öffnungswinkel α, kann unter Beibehaltung eines zumindest teilweisen Kontakts der Dichtung 15 bzw. 25 (hier die linke Seite der umlaufenden Dichtung) variiert werden. Dadurch ist eine vorteilhafte Durchflussregelung gegeben. Je kleiner der Winkel α eingestellt wird, desto geringer ist die pro Zeiteinheit mögliche Durchflussmenge eines Mediums. Ein Vorteil liegt dabei im Speziellen darin, dass der Winkel α auch bei verhältnismässig sehr kleinen Winkeln noch schrittweise oder kontinuierlich verstellbar bleibt und eine aus einer Druckdifferenz an den beiden Ventiltellerseiten (Ober- und Unterseite) resultierende Kraft an dem Teller ebenso kontinuierlich variiert. Hierdurch kann eine sehr präzise Schliess- oder Öffnungsbewegung durchgeführt werden, wobei insbesondere im Übergang nach oder von der Schliessposition aus oder in die Regelposition ein kontinuierlich einsetzendes oder abbrechendes Strömen eines Mediums gesteuert werden kann.

Insbesondere variiert bei einer Winkelveränderung auch die Fläche der kontaktierten Dichtung. Mit zunehmend kleinerem Winkel wird die Kontaktfläche des Dichtmaterials grösser.

Vorteilhaft ist die Regelung insbesondere dann, wenn an der Tellerunterseite (zum Ventilsitz weisend) ein geringerer Druck herrscht als an der Oberseite. Durch die teilweise Kontaktierung des Ventiltellers und des Ventilsitzes (vermittels der Dichtung) kann ein Teil der auf den Teller wirkenden Kraft (aufgrund der Druckdifferenz) bereits über die Kontaktfläche aufgenommen werden und muss so nicht durch den Ventilantrieb oder die Aufhängung des Tellers abgefangen werden.

Der Ventilteller 11 bzw. 21 kann in der Feinregelposition auch als eine Klappe angesehen werden, die bei Kontakt mit dem Ventilsitz 12 bzw. 22 um eine Achse geklappt oder geschwenkt wird.

Zur Bereitstellung der schrägen Anlage der Ventilteller 11 und 12 an die jeweiligen Ventilsitze 12 und 22 sind unterschiedliche mechanische Lösungen denkbar. Wie in der Vakuumtechnik generell und für Vakuumventillösungen im Speziellen sind Dichtlösungen mit einer Vermeidung oder deutlich reduzierten Gefahr der Partikelerzeugung zu bevorzugen. Hierzu ist eine Vermeidung einer relativen Beweglichkeit von Bauteilen oder bei einer solchen benötigten Beweglichkeit eine Lagerung von Bauteilen möglichst ohne das Auftreten von Reibung zwischen den Bauteilen zu bevorzugen.

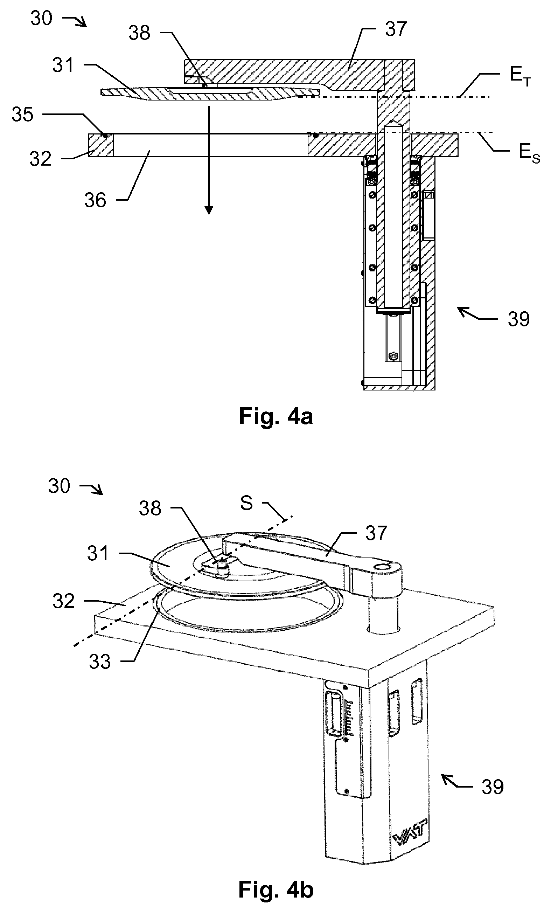

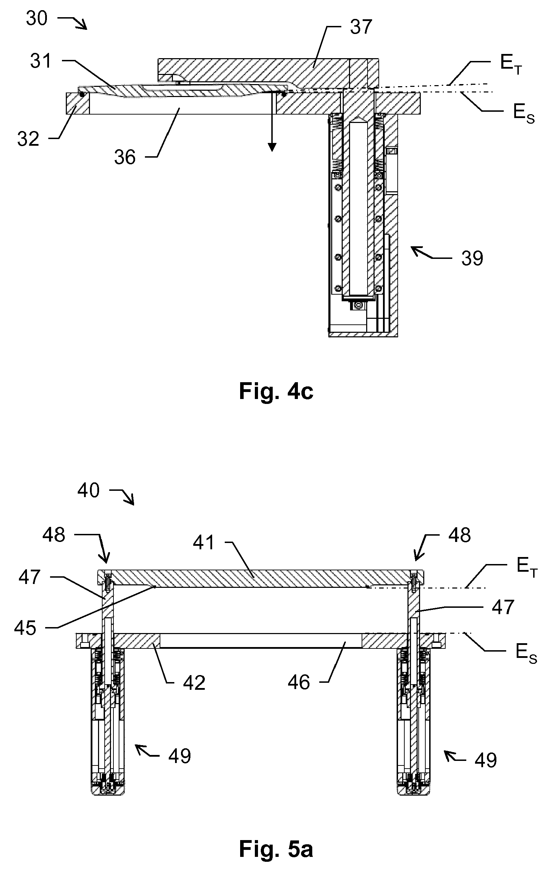

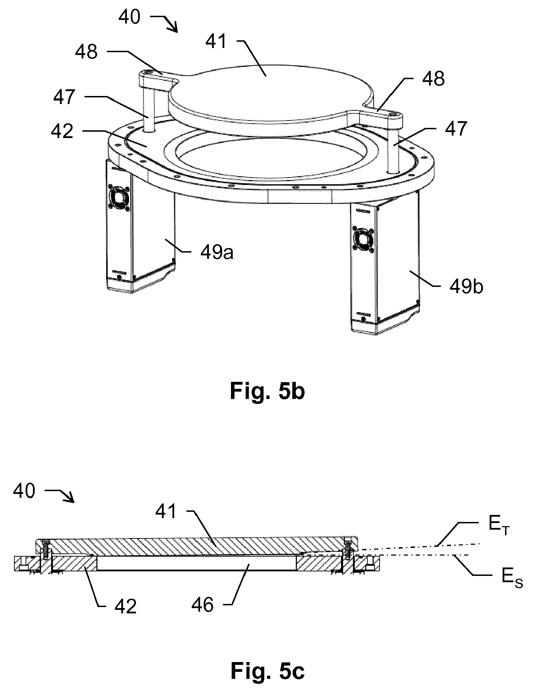

Erfindungsgemäss sind daher partikelvermeidende Antriebs- und Haltelösungen für den Teller wie in den nachfolgen Figuren 4 und 5 vorgeschlagen. Die lineare Beweglichkeit des Ventiltellers relativ zum jeweiligen Ventilsitz steht dabei ausser Frage und muss bereitgestellt sein, jedoch ist der Aspekt der Schwenkbarkeit des Tellers um eine Schwenkachse zur Einstellung der Schräge relativ zum Sitz in der Feinregelposition dabei ebenso zu berücksichtigen und hier erfindungsgemäss (Vermeidung der Partikelgenerierung) gelöst.

Die Figuren 3a und 3b zeigen die Ventile 10 und 20 jeweils in einer geschlossenen Schliessposition, in der ein Fliessen eines Mediums durch die Ventilöffnung 16 oder 26 aufgrund der durch die Dichtung 15 bzw. 25 vollständig bereitgestellten Abdichtwirkung gänzlich unterbrochen ist. Die Dichtung 15 bzw. 25 ist dabei jeweils mit der gegenüberliegenden korrespondierenden Dichtfläche der Gegenseite in Vollkontakt, d.h. über den gesamten Umlauf um die Ventilöffnung, und zu einem vorbestimmten Grad verpresst. Die Dichtebenen E_{T} und E_{S} liegen parallel vor.

Die Figuren 4a und 4b zeigen eine erfindungsgemässe Ausführungsform eines Vakuumventils 30 in einer Offenposition. Der Ventilteller 31 ist parallel beabstandet zum Ventilsitz 32 positioniert und gibt die Ventilöffnung 36 frei.

Auf der Dichtfläche 33 des Ventilsitzes 32 ist eine Dichtung 35 aufgebracht. Der Verlauf der Dichtfläche 33 definiert eine Dichtebene E_{S}.

Der Ventilteller 31 ist mittels eines als Querträger 38 ausgebildeten Kopplungselements mit einem Verstellarm 37 verbunden. Der Verlauf der Dichtfläche des Ventiltellers 31, die der Dichtfläche 33 des Ventilsitzes 32 gegenüberliegt und hinsichtlich Form und Grösse mit dieser korrespondiert, definiert die Dichtebene E_{T}. In der Offenposition sind die Dichtebenen E_{T} und E_{S} parallel zueinander ausgerichtet.

Der Querträger 38 definiert durch dessen Erstreckung quer zum Verstellarm 37 eine Schwenkachse S, die ebenso quer zum Verstellarm 37 verläuft. Der Querträger 38 ist in dessen Mittelbereich fest mit dem Verstellarm 37 und an dessen Enden fest mit dem Ventilteller 31 verbunden (hier: verschraubt). Die jeweiligen Befestigungen können jedoch auch alternativ, z.B. mittels Bolzen oder einer Schweissung (z.B. Reibrührschweissung), hergestellt sein. Insbesondere können der Verstellarm 37 und der Querträger 38 einstückig ausgebildet sein.

Der Querträger 38 selbst ist derart ausgeformt, dass dieser eine bestimmte Materialelastizität bereitstellt und dadurch in einem vordefinierten Rahmen (z.B. bezüglich Verdrehwinkel und Kraftaufnahme) im Wesentlichen verschleissfrei um die Schwenkachse S verdrillbar ist.

Der Verstellarm 37 ist mittels einer Schubstange oder Führungsstange mit der Antriebseinheit 39 verbunden. Der Teller 31 kann mittels des Antriebs 39 linear entlang der Erstreckung der Schubstange bewegt werden.

Die Figur 4c zeigt das Ventil 30 in einer Feinregelposition. Der Ventilteller 31 ist teilweise mit der Dichtung 35 in Kontakt. Auf der gezeigten rechten Seite des Querschnitts durch den Teller 31 besteht kein Kontakt zwischen Teller 31 und Dichtung 35. Der Ventilteller 31 ist also nicht parallel zum Ventilsitz 32 ausgerichtet. Die Dichtebenen E_{T} und E_{S} schneiden sich mit einem definierten Winkel α.

Die gezeigte Feinregelposition kann dadurch hergestellt werden, dass die Verbindung zwischen Querträger 38 und Verstellarm 37 (gesteuert) schwenkbar ausgeführt ist. Bei einer Annäherung des Ventiltellers 31 an den Ventilsitz 32 kann eine leichte Verschwenkung eingestellt und beibehalten (festgestellt) werden. Alternativ kann der Teller 31 mittels des Querträgers 38 derart befestigt sein, dass der Teller 31 in der Offenposition nicht parallel zum Ventilsitz 32 vorliegt, sondern bereits eine relative Schrägstellung aufweist. Die Dichtebenen E_{T} und E_{S} liegen dabei entsprechend nicht parallel, sondern schliessen einen bestimmten Winkel α ein.

Der Teller 31 kommt durch die lineare Annäherungsbewegung dann entsprechend schräg auf dem Sitz 32 zur Anlage. Durch eine weitere lineare Verstellung mittels des Antriebs 39 kann die Schräge des Tellers 31 durch Verdrillung der Querträgers 38 verändert werden. Wird die Schubstange also weiter eingefahren, wird der Öffnungswinkel α kleiner. Dabei wird der Querträger 38 mit einer inneren Torsion beaufschlagt, d.h. verdrillt. Hierdurch kann eine kontinuierlich veränderbare und dabei homogen beibehaltene Anpressung der Tellerdichtfläche auf der Dichtung 35 bereitgestellt werden. Dies kann in der vollständigen Verschliessung der Öffnung 36 resultieren, so dass hier ebenso eine hinsichtlich des Dichtungsverlaufs homogene Verpressung der Dichtung entsteht.

Der Querträger ermöglicht somit eine kontinuierliche (oder schrittweise) Veränderung der Schrägstellung durch dessen Verdrillung, wobei eine homogene Verpressung der Dichtung 35 entsteht. Als Folge der homogenen Verpressung und der damit nicht stattfindenden Querbeanspruchung der Dichtung ist zudem die Partikelentstehung minimiert oder vollständig verhindert.

Alternativ zur Schrägstellung an der Verbindung zwischen Verstellarm 37 und Querträger 38 kann die Schrägstellung des Tellers 31 relativ zum Sitz 32 auch mittels einer Verschwenkung oder permanenten Schrägstellung der Schubstange bereitgestellt werden. Der durch den Querträger dann bereitgestellte Effekt entspricht der vorgenannten Variante.

Die Figuren 5a und 5b zeigen eine weitere erfindungsgemässe Ausführungsform eines Vakuumventils 40 in einer Offenposition. Der Ventilteller 41 ist parallel beabstandet zum Ventilsitz 42 positioniert und gibt die Ventilöffnung 46 frei.

Im Unterschied zu einer Ausführung gemäss den Figuren 4a-c ist der Ventilteller 41 mittels zweier Führungsstangen 47, die jeweils mit einem Motor einer Antriebseinheit 49 gesteuert bewegt werden können, relativ zum Ventilsitz 42 bewegbar angeordnet. Die Dichtung 45 befindet sich an der Unterseite des Tellers 41. Die jeweiligen Dichtflächen definieren wiederum die Dichtebenen E_{T} und E_{S}.

Die Führungsstangen 47 sind mit den Aufnahmen zweier Kopplungselemente 48 verbunden. Die Kopplungselemente 48 sind hier einstückig mit dem Ventilteller 41 ausgebildet, es versteht sich jedoch, dass die Kopplungselemente 48 ebenso als separates Bauteil ausgestaltet sein können, wobei diese z.B. mit dem Teller 41 verschraubt oder verschweisst sein können.

Zur Einstellung einer bestimmten Feinregelposition wie in Figur 5c gezeigt können die beiden Antriebsteile 49a und 49b des Antriebs 49 entsprechend individuell angesteuert werden. Einer der beiden Antriebsteile 49a, 49b erzeugt dabei eine zurückgelegte Wegstrecke für eine der Führungsstangen 47, die grösser ist als diejenige Wegstrecke die der zweite Antrieb für die andere Führungsstange 47 im gleichen Zeitraum bereitstellt. In anderen Worten wird eine der Führungsstangen 47 zumindest über einen gewissen Zeitabschnitt schneller eingefahren als die andere. Alternativ kann die Linearbewegung mit dem ersten Antrieb früher gestartet werden als mit dem zweiten Antrieb, wobei die Antriebe in Folge eine im Wesentlichen synchrone Bewegung bereitstellen.

Als Resultat ergibt sich ein relativ zum Ventilsitz 42 schräg gestellter Ventilteller 41. Der Ventilteller 41 bzw. dessen Dichtung 45 wird mit dieser so einstellbaren Schräglage mit dem Ventilsitz 42 (teilweise) kontaktiert (Fig. 5c). Nach Erreichen einer ersten Endposition mit der ersten, schneller bzw. weiter geführten Führungsstange 47 kann die Regulierung eines Durchflusses bzw. eines Durchströmens durch die Ventilöffnung 46 allein durch die weitere Linearveschiebung der zweiten Führungsstange 47 bereitgestellt werden. Die erste Endposition kann im Wesentlichen der Position des Tellers 41 entsprechen, bei welcher ein Kontakt zwischen Dichtung 45 und Ventilsitz entsteht. Es versteht sich jedoch, dass nach einem In-Kontakt-Treten eine weitere Linearverstellung erfolgen kann, um eine gewünschte Verpressung des Dichtmaterials 45 zu erreichen. Die erste und auch eine zweite Endposition können also auch mit einem Erzeugen einer gewünschten Dichtungsverpressung korrespondieren.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zum Regeln eines Volumenstroms oder Druckes in einem Prozessvolumen unter Vakuumbedingungen des Stands der Technik kombiniert werden.

## Patentansprüche

1. Vakuumventil (10,20,30,40), insbesondere Vakuumregelventil, zur Regelung eines Volumen- oder Massenstroms und zum gasdichten Unterbrechen eines Fliesswegs, mit
• einem Ventilsitz (12,22,32,42), der eine eine Öffnungsachse (A) definierende
Ventilöffnung (16,26,36,46) und eine die Ventilöffnung (16,26,36,46) umlaufende und eine erste Dichtebene (Es) definierende erste
Dichtfläche (13,23,33) aufweist,
• einem Ventilteller (11,21,31,41) zur Regelung des Volumen- oder Massenstroms und zur Unterbrechung des Fliesswegs, mit einer zu der ersten Dichtfläche (13,23,33) korrespondierenden zweiten Dichtfläche (14,24), wobei die zweite Dichtfläche (14,24) eine zweite Dichtebene (E_{T}) definiert, deren veränderliche Lage durch eine jeweilige Position und Ausrichtung des Ventiltellers (11,21,31,41) bestimmt ist,
• einem mit dem Ventilteller (11,21,31,41) verbundenen und eine Aufnahme aufweisenden ersten Kopplungselement (38,48) zur Bereitstellung einer gesteuerten Führung des Ventiltellers (11,21,31,41) und
• einer mit dem ersten Kopplungselement (38,48), insbesondere vermittels der Aufnahme, gekoppelten Antriebseinheit (39,49), die derart ausgebildet ist, dass der Ventilteller (11,21,31,41) von
□ einer Offenposition, in welcher der Ventilteller (11,21,31,41) und der Ventilsitz (12,22,32,42) relativ zueinander kontaktlos vorliegen, in
□ eine Schliessposition, in welcher über eine dazwischen liegende Dichtung (15,25,35,45) ein axial dichtender Kontakt zwischen der ersten Dichtfläche (13,23,33) und der zweite Dichtfläche (14,24) besteht und die Ventilöffnung (16,26,36,46) dadurch gasdicht verschlossen ist,
und zurück verstellbar ist, zumindest im Wesentlichen entlang einer geometrischen Längsachse in eine Längsschliessrichtung,
**dadurch gekennzeichnet, dass**
die Antriebseinheit (39,49) und der Ventilteller (11,21,31,41) derart ausgebildet sind und zusammenwirken, insbesondere derart gekoppelt sind, dass der Ventilteller (11,21,31,41) in eine Feinregelposition verstellbar ist, wobei
• der Ventilteller (11,21,31,41) relativ zum Ventilsitz (12,22,32,42) derart definiert schräg vorliegt, dass die erste Dichtebene (Es) und die zweite Dichtebene (E_{T}) einen definierten Winkel (α) einschliessen, und
• die Dichtung (15,25,35,45) an der ersten oder zweiten Dichtfläche (13,23,33,14,24) vollständig anliegt und an der jeweils anderen Dichtfläche (13,23,33,14,24) nur teilweise anliegt.

2. Vakuumventil (10,20,30,40) nach Anspruch 1,
**dadurch gekennzeichnet, dass**
die Antriebseinheit (39,49) und der Ventilteller (11,21,31,41) derart ausgebildet und gekoppelt sind, dass bei dem Verstellen des Ventiltellers (11,21,31,41) von der Offenposition in die Schliessposition oder von der Schliessposition in die Offenposition der Ventilteller (11,21,31,41) vor Erreichen der Schliessposition bzw. vor Erreichen der Offenposition die Feinregelposition einnimmt.

3. Vakuumventil (10,20,30,40) nach Anspruch 1 oder 2,
**dadurch gekennzeichnet, dass**
der Ventilteller (11,21,31,41) in der Feinregelposition derart positioniert ist, dass die durch eine Erstreckung der zweiten Dichtfläche (14,24) definierte zweite Dichtebene (E_{T}) schräg zu der Öffnungsachse (A) oder zu der Längsachse vorliegt.

4. Vakuumventil (10,20,30,40) nach einem der Ansprüche 1 bis 3,
**dadurch gekennzeichnet, dass**
• die erste Dichtfläche (13,23,33) in eine Richtung parallel zur Öffnungsachse (A) oder Längsachse weist und sich orthogonal zur Öffnungsachse (A) oder Längsachse erstreckt oder
• die erste Dichtfläche (13,23,33) in eine Richtung quer zur Öffnungsachse (A) oder Längsachse und schräg zu einer orthogonal zur Öffnungsachse (A) oder Längsachse sich erstreckenden Ebene weist.

5. Vakuumventil (10,20,30,40) nach einem der Ansprüche 1 bis 4,
**dadurch gekennzeichnet, dass**
• die erste und die zweite Dichtebene (E_{S},E_{T}) in der Offenposition und in der Feinregelposition einen definierten Winkel (α) einschliessen und
• die erste und die zweite Dichtebene (E_{S},E_{T}) in der Schliessposition im Wesentlichen parallel ausgerichtet sind.

6. Vakuumventil (10,20,30,40) nach einem der Ansprüche 1 bis 5,
**dadurch gekennzeichnet, dass**
eine zweite, mehrere oder eine Vielzahl von Feinregelpositionen des Ventiltellers (11,21,31,41) einstellbar sind, insbesondere fortlaufend, wobei
• der durch die erste und die zweite Dichtebene (E_{S},E_{T}) jeweils eingeschlossene Winkel (αₙ) jeweils unterschiedlich ist und
• die Dichtung (15,25,35,45) jeweils an einer der beiden Dichtflächen (13,23,33,14,24) vollständig anliegend und an der anderen
Dichtfläche (13,23,33,14,24) nur teilweise anliegend vorliegt.

7. Vakuumventil (10,20,30,40) nach Anspruch 6,
**dadurch gekennzeichnet, dass**
die Feinregelpositionen gesteuert jeweils individuell oder kontinuierlich einstellbar sind und damit eine insbesondere kontinuierliche Regelung des Volumen- oder Massenstroms eines Mediums durch die
Ventilöffnung (16,26,36,46) bereitstellbar ist.

8. Vakuumventil (10,20,30,40) nach einem der Ansprüche 1 bis 7,
**dadurch gekennzeichnet, dass**
das erste Kopplungselement (38) als ein sich quer zur Öffnungsachse (A) oder zur Längsachse erstreckender Querträger (38) ausgebildet ist und an einer Rückseite des Ventiltellers (11,21,31,41) an zumindest einer Verbindungsstelle mit dem Ventilteller (11,21,31,41) verbunden ist, wobei die Aufnahme eine mittlere Kopplungsstelle für eine Kopplung der Antriebseinheit (39) quer zu einer Erstreckungsrichtung des Querträgers (38) bereitstellt und der Querträger (38) mittels eines sich quer zu der Erstreckungsrichtung erstreckenden Verstellarms (37) mit der Antriebseinheit (39) verbunden ist.

9. Vakuumventil (10,20,30,40) nach Anspruch 8,
**dadurch gekennzeichnet, dass**
die Verbindung des Querträgers (38) mit dem Ventilteller (11,21,31,41) an der zumindest einen Verbindungsstelle eine Reibrührschweissverbindung aufweist.

10. Vakuumventil (10,20,30,40) nach Anspruch 8 oder 9,
**dadurch gekennzeichnet, dass**
der Querträger (38)
• auf der Rückseite des Ventiltellers (11,21,31,41) an mindestens zwei beidseitig zu der mittleren Kopplungsstelle liegenden seitlichen Verbindungsstellen mit dem Ventilteller (11,21,31,41) verbunden ist,
• in einem mittleren Abschnitt, der die mittlere Kopplungsstelle und beidseitig an diese anschliessende Abschnitte umfasst und sich zwischen den seitlichen Verbindungsstellen erstreckt, einen Abstand von der Rückseite aufweist,
• derart elastisch ausgebildet ist, dass durch eine Verwindung des Querträgers (38) der Ventilteller (11,21,31,41) relativ zu dem Verstellarm (37) um eine rechtwinklig zu der Öffnungsachse (A) oder zu der Längsachse stehende Schwenkachse (S) verschwenkbar ist und
• insbesondere einstückig ausgebildet ist.

11. Vakuumventil (10,20,30,40) nach einem der Ansprüche 1 bis 10,
**dadurch gekennzeichnet, dass**
• die Antriebseinheit (39,49) zumindest einen Motor (49a,49b) und zumindest eine durch den zumindest einen Motor (49a,49b) gesteuert entlang oder parallel der Längssachse bewegbare Führungskomponente (47), insbesondere Führungsstange, aufweist und
• der Ventilteller (11,21,31,41) mit der Führungskomponente (47) vermittels der Aufnahme verbunden und relativ zum Ventilsitz (12,22,32,42) bewegbar ist.

12. Vakuumventil (10,20,30,40) nach Anspruch 11,
**dadurch gekennzeichnet, dass**
die Antriebseinheit (39,49) zwei durch den zumindest einen Motor gesteuert parallel zur Längssachse bewegbare Führungskomponenten (47), insbesondere Führungsstangen, aufweist.

13. Vakuumventil (10,20,30,40) nach Anspruch 12,
**dadurch gekennzeichnet, dass**
• der Ventilteller (11,21,31,41) ein mit ihm verbundenes zweites Kopplungselement (48) mit einer Aufnahme aufweist, wobei das erste und das zweite Kopplungselement (48) direkt an dem Ventilteller (11,21,31,41) angeordnet sind, insbesondere einstückig mit dem Ventilteller (11,21,31,41) ausgebildet sind, und
• jeweils eine Führungskomponente (47) mit einer jeweiligen der Aufnahmen des ersten und des zweiten Kopplungselements (48) verbunden ist.

14. Vakuumventil (10,20,30,40) nach Anspruch 12 oder 13,
**dadurch gekennzeichnet, dass**
• die Antriebseinheit (49) zwei Motoren (49a,49b) aufweist und jede der zwei Führungskomponenten (48) durch einen der Motoren gesteuert bewegbar ist und
• die Feinregelposition, insbesondere die Vielzahl der Feinregelpositionen, mittels einer definierten, insbesondere individuellen, derartigen Ansteuerung der zwei Motoren (49a,49b) bereitstellbar ist, dass dadurch die Schrägstellung der ersten relativ zur zweiten Dichtebene bewirkbar ist.

15. Vakuumventil (10,20,30,40) nach Anspruch 12,
**dadurch gekennzeichnet, dass**
• das Vakuumventil (10,20,30,40) eine die Führungskomponenten (47) verbindende Brücke aufweist und
• das erste Kopplungselement (38,48) mit der Brücke verbunden ist und insbesondere als Querträger ausgebildet ist.
